**Europäisches Patentamt**

**European Patent Office**

**Office européen des brevets**

(19)

(11) Veröffentlichungsnummer : **0 390 725 B1**

(12)

# EUROPÄISCHE PATENTSCHRIFT

(45) Veröffentlichungstag der Patentschrift :
**19.05.93 Patentblatt 93/20**

(51) Int. Cl.$^5$ : **G01B 11/02,** G11B 11/00

(21) Anmeldenummer : **90730003.2**

(22) Anmeldetag : **20.03.90**

(54) nerfahren zur Bestimmung der Lage eines Bezugspunktes eines Abtasters relativ zu einem Inkrementalmassstab sowie Bezugspunktgeber.

(30) Priorität : **25.03.89 DE 3909856**

(43) Veröffentlichungstag der Anmeldung :
**03.10.90 Patentblatt 90/40**

(45) Bekanntmachung des Hinweises auf die
Patenterteilung :
**19.05.93 Patentblatt 93/20**

(84) Benannte Vertragsstaaten :
**AT BE CH DE DK ES FR GB GR IT LI LU NL SE**

(56) Entgegenhaltungen :
**EP-A- 0 135 673**
**DE-B- 1 813 475**

(73) Patentinhaber : **E.M.S. TECHNIK GMBH**
**Sägemühlenstrasse 89**
**W-2950 Leer (DE)**

(72) Erfinder : **Kellner, Helmut, Prof. Dr.**
**Auf der Kave 50**
**W-2956 Moormerland (DE)**

(74) Vertreter : **Patentanwälte Thömen & Körner**
**Zeppelinstrasse 5**
**W-3000 Hannover 1 (DE)**

## Beschreibung

Die Erfindung betrifft ein verfahren zur Bestimmung der Lage eines Bezugspunktes eines Abtasters relativ zu einem Inkrementalmaßstab nach dem Oberbegriff des Anspruchs 1. Für einen Absolutmaßstab ist das Verfahren im Anspruch 10 angegeben.

Ein solches Verfahren dient z.B. dazu, bei der Steuerung von Produktionsautomaten Wegstrecken zwischen längsverschieblichen Gegenständen zu erfassen. Dabei ist die Genauigkeit, mit der diese Wegstrecken ermittelt werden können, von ausschlaggebender Bedeutung für die Fertigungsgenauigkeit des Automaten.

Bekannte Verfahren verwenden Inkrementalmaßstäbe mit einer Markenauflösung bis zu etwa 2 μm. Um die hierdurch vorgegebene Auflösung ausnutzen sowie darüber hinaus eine Interpolation zwischen den Marken vornehmen zu können, müssen die üblichen, die Marken lesenden Abtaster sehr genau geführt werden. Zur Erzielung einer hohen Meßgenauigkeit müssen also bei der Herstellung derartiger Meßsysteme sehr geringe Fertigungstoleranzen eingehalten werden, was sich entsprechend auf die Kosten auswirkt. Ein weiterer Nachteil besteht darin, daß auch fortschreitender Verschleiß bei den Führungseinrichtungen des Abtasters ständig steigende Meßungenauigkeiten mit sich bringt.

Der Erfindung liegt die Aufgabe zugrunde, ein Verfahren der eingangs genannten Art dahingehend zu verbessern, daß eine hohe Meßgenauigkeit unabhängig von einer exakten Führung des Abtasters erreichbar ist.

Diese Aufgabe wird bei dem im Oberbegriff des Anspruchs 1 beschriebenen Verfahren durch die im kennzeichnenden Teil angegebenen Merkmale gelöst.

Die Wirkungsweise der Erfindung beruht auf folgender Überlegung: Werden zwei benachbarte Marken auf einem Maßstab gelesen, so ist der zwischen einem Bezugspunkt und diesen Marken gebildete Projektionswinkel sowohl davon abhängig, in welchem Abstand sich der Bezugspunkt über den Marken befindet, als auch, wie weit er seitlich versetzt ist. Ein Maß für den seitlichen Versatz kann aus dem Winkel nur dann hergeleitet werden, wenn der Abstand des Bezugspunktes vom Maßstab vorgegeben und bekannt ist.

Wird noch eine weitere benachbarte Marke hinzugenommen und der weitere Projektionswinkel zwischen dem Bezugspunkt, dieser weiteren Marke und einer der anderen Marken ermittelt, so existiert für eine Kombination von zwei Projektionswinkeln nur ein einziger Ort, auf dem sich der Bezugspunkt befinden kann. Die Koordinaten des Bezugspunktes lassen sich dann mit trigonometrischen Funktionen eindeutig ermitteln. Dieser Zusammenhang wird bei der Erfindung ausgenutzt, wodurch eine präzise Führung des Abtasters zur Einhaltung eines konstanten Abstandes von dem Maßstab entfallen kann. Das Verfahren liefert als Koordinaten sowohl ein Maß in Richtung der Maßstabsachse als auch ein Maß, das den Abstand des Abtasters vom Maßstab angibt.

Zur Durchführung der Berechnung eignen sich folgende Rechenschritte, die durch nachfolgende Formeln zum Ausdruck kommen:

$$X_o = \frac{\Delta \cdot (Z1^2 - Z2^2)}{(Z1 - Z2)^2 + \Delta^2}$$

$$Z_o = \frac{\Delta^2 \cdot (Z1 + Z2)}{(Z1 - Z2)^2 + \Delta^2}$$

Dabei ist $Z1 = \frac{\Delta}{2\tan\alpha}$ und $Z2 = \frac{\Delta}{2\tan\beta}$.

Die Werte Z1 und Z2 geben die Abstände der Mittelpunkte von Kreisen zum Maßstab an. Diese Kreise stellen die Ortskurven gleicher Peripheriewinkel, wie sie mit den Projektonswinkeln $\alpha$ und $\beta$ übereinstimmen dar. Die Mittelpunkte der Kreise liegen bezüglich der Maßstabachse jeweils zwischen zwei benachbarten Marken. Den Schnittpunkt der Ortskurven bildet der Bezugspunkt.

Vorzugsweise werden die Projektionswinkel durch optische Abbildung der Marken auf einer Projektionsfläche und Abstandsmessung der Projektionsorte gewonnen.

Auf diese Weise läßt sich die erforderliche gewünschte Auflösung des Winkels bei vorgegebener Auflösung der Meßsensoren auf der Projektionsfläche durch geeignete Wahl des Abstandes der Projektionsfläche von der Projektionsoptik sowie dessen Brennweite realisieren.

Die Erfindung betrifft ferner einen Bezugspunktgeber nach dem Oberbegriff des Anspruchs 4.

Diesbezüglich liegt ihr die Aufgabe zugrunde, einen Bezugspunktgeber der vorgenannten Art dahingehend zu verbessern, daß eine hohe Meßgenauigkeit unabhängig von einer exakten Führung des Abtasters erreichbar ist.

Diese Aufgabe wird bei dem im Oberbegriff des Anspruchs 4 beschriebenen Bezugspunktgeber durch die im kennzeichnenden Teil angegebenen Merkmale gelöst.

Bei dem Bezugspunktgeber nach der Erfindung werden also mindestens zwei Projektionswinkel, die sich zwischen dem Bezugspunkt und mindestens drei benachbarten Marken auf dem Maßstab ergeben, ermittelt. Diese beiden Projektionswinkel definieren eindeutig die Lage des Bezugspunktes hinsichtlich seines Abstandes von dem Maßstab und des in Richtung der Maßstabsachse seitlichen Versatzes von den Marken.

Mittels trigonometrischer Funktionen können die Koordinaten gezielt, also ohne auf Näherungsberechnungen zurückgreifen zu müssen, bestimmt werden. Besonders vorteilhaft ist es, daß dadurch exakte Interpolationen in einem großen Wertebereich möglich sind, die es gestatten, die Dichte der Marken auf dem Inkrementalmaßstab erheblich zu verringern. Dadurch können auch dessen Herstellungskosten im Vergleich zu bekannten Systemen gesenkt werden.

Ein Rechner, mit dem die Koordinaten des Bezugspunktes ermittelt werden, ist zweckmäßig so gesteuert, daß bei den auszuführenden Rechenschritten folgende Formeln angewandt werden:

$$X_o = \frac{\Delta \cdot (Z1^2 - Z2^2)}{(Z1 - Z2)^2 + \Delta^2}$$

$$Z_o = \frac{\Delta^2 \cdot (Z1 + Z2)}{(Z1 - Z2)^2 + \Delta^2}$$

Dabei ist $Z1 = \dfrac{\Delta}{2 \tan \alpha}$ und $Z2 = \dfrac{\Delta}{2 \tan \beta}$.

Z1 und Z2 sind die Abstände zwischen den Mittelpunkten von Kreisen und dem Maßstab. Die Kreise stellen Ortskurven gleicher Peripheriewinkel, wie sie mit den Projektionswinkeln $\alpha$ und $\beta$ übereinstimmen, dar. Die Mittelpunkte der Kreise liegen bezüglich der Maßstabachse jeweils zwischen zwei benachbarten Marken. Den Schnittpunkt der Ortskurven bildet der Bezugspunkt.

Die Berechnungen lassen sich mit üblichen Rechnern schnell und exakt durchführen, so daß auch bei Bewegung des Abtasters praktisch ohne Meßverzögerung aktualisierte Werte vorliegen.

Bei einer praktischen Ausgestaltung ist der Abtaster als optischer Abtaster ausgebildet, der eine Abbildungsoptik mit einer Projektionsfläche und einer Abstandsmeßeinrichtung umfaßt. Hierbei ist der Bezugspunkt durch das Projektionszentrum der Abbildungsoptik gebildet.

Bei diesem Abtaster läßt sich die für die Meßgenauigkeit erforderliche Winkelauflösung bei vorgegebenen Meßsensoren auf der Projektionsfläche durch geeignete Wahl des Abstandes der Projektionsfläche von der Projektionsoptik sowie dessen Brennweite realisieren. Die Baugröße optischer Abtaster hoher Genauigkeit läßt beim heutigen Stand der Optoelektronik so geringe Abmessungen zu, daß die Abtaster praktisch an jeder meßtechnisch geeigneten Stelle von Produktionsautomaten angebracht werden können.

Vorzugsweise ist die Projektionsfläche und die Abstandsmeßeinrichtung durch ein Diodenarray, z.B. eine CCD-Zeile gebildet, das mit einer Zählschaltung verbunden ist.

Derartige Bauelemente sind aufgrund einer breiten Anwendung auf vielen technischen Gebieten kostengünstig erhältlich und inzwischen ausgereift und zuverlässig. Durch ständige Weiterentwicklung konnte die Auflösung wesentlich verbessert werden, so daß z.B. $10^3$ Lichtempfangselemente (Pixel) auf einer Strecke von wenigen Milimetern untergebracht werden können.

Bei einer praktischen Ausgestaltung ist der Inkrementalmaßstab mit Marken versehen, die einen Abstand von ca. 1 mm aufweisen.

Durch die beschriebene Art der Berechnung des Bezugspunktes ist dieser Abstand ausreichend, um eine Wegstreckenauflösung zu erhalten, die sonst nur mit einer wesentlich dichteren Anordnung der Marken möglich wäre. Dafür wird die Herstellung des Maßstabes wesentlich vereinfacht.

Vorzugsweise besteht der Inkrementalmaßstab aus einem Material mit niedrigem Temperaturausdehnungskoeffizienten, vorzugsweise aus Invar oder Zerodur.

Hierdurch läßt sich die durch die erfindungsgemäßen Maßnahmen erzielbare hohe Systemgenauigkeit innerhalb eines relativ breiten Temperaturbereichs einhalten.

Weiterbildungen und vorteilhafte Ausführungen des erfindungsgemäßen Verfahrens sowie des Bezugspunktgebers ergeben sich aus den Ansprüchen, der weiteren Beschreibung und der Zeichnung, die ein Ausführungsbeispiel veranschaulicht und erläutert.

In der Zeichnung zeigen:

Fig. 1     eine schematische Seitenansicht eines Bezugspunktgebers,

Fig. 2     eine geometrische Darstellung der Projektionswinkel zur Erläuterung des Berechnungsverfahrens.

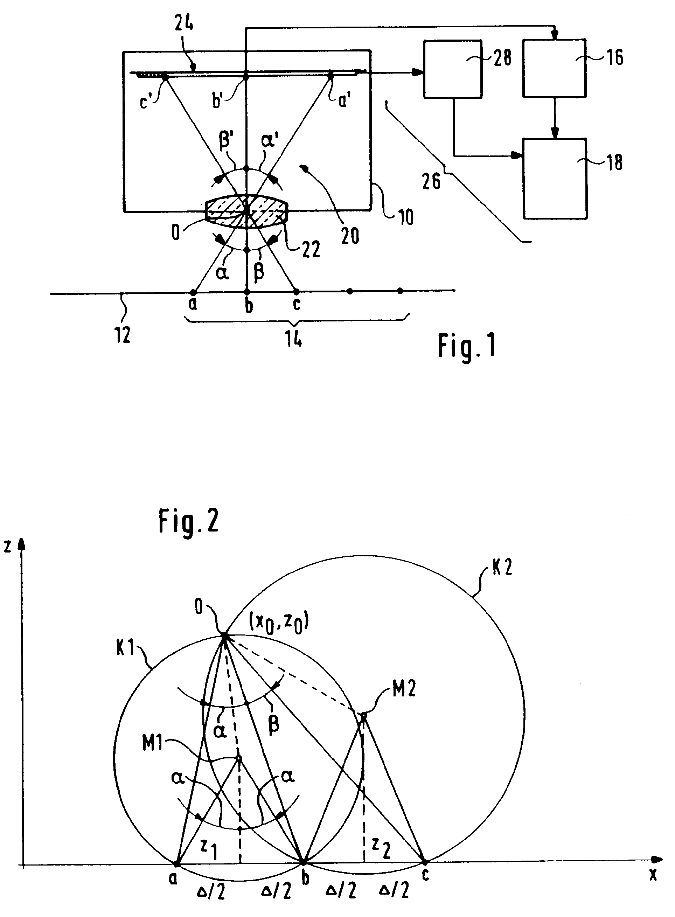

Fig. 1 zeigt einen Bezugspunktgeber in schematischer Darstellung in Seitenansicht. Dieser umfaßt einen Inkrementalmaßstab 12 mit Marken 14, von denen einzelne Marken hier mit a, b und c bezeichnet sind. Oberhalb des Maßstabes 12 befindet sich ein Abtaster 10, der einmal Ereignisse, wie das Passieren von Marken 14 registriert und zum anderen eine Winkelmeßvorrichtung 20 umfaßt. Mit Hilfe dieser Winkelmeßvorrichtung 20 können Projektionswinkel, die sich zwischen den Marken 14 und einem Bezugspunkt des Abtasters 10 ergeben, ermittelt werden.

Der Abtaster 10 ist als optischer Abtaster ausgebildet und umfaßt eine Abbildungsoptik 22 mit einer Projektionsfläche 24 sowie einer Abstandsmeßeinrichtung 26. Bei diesem Abtaster ist ein Bezugspunkt O durch das dem Maßstab zugewandte Projektionszentrum der Abbildungsoptik 22 gebildet.

Die als Bestandteil der Winkelmeßvorrichtung 20 vorhandene Projektionsfläche 24 mit der Abstandsmeßeinrichtung 26 ist durch ein Diodenarray, z.B. in Gestalt einer CCD-Zeile gebildet. Die Anzahl der Pixel ist so gewählt, daß zwischen der Abbildung zweier Marken ausreichend viele Zwischenstufen erfaßbar sind.

Zur Auswertung der vom Abtaster 10 gelesenen Werte dient einmal ein Zähler 16 der mit einem Rechner 18 verbunden ist sowie ein weiterer Zähler 28, der ebenfalls mit dem Rechner 18 verbunden ist. Dabei dient der Zähler 16 dazu, die Ereignisse, also die Anzahl der Marken zu zählen, die beim Längsverschieben des Abtasters 10 über den Inkrementalmaßstab 12 passiert werden. Mit Hilfe dieses Zählers 16 und des Rechners 18 ist somit eine grobe Bestimmung der zurückgelegten Wegstrecke möglich, wobei hier die Auflösung bei Anordnung der Marken 14 auf dem Inkrementalmaßstab in einem Abstand $\Delta$ von ca. 1 mm ebenfalls nur in dieser Größenordnung liegt.

Die Interpolation zwischen den Marken 14 wird mittels der Winkelmeßvorrichtung 20 vorgenommen. Wie aus der Zeichnung ersichtlich, werden hier als Beispiel die Marken a, b und c, welche zum Bezugspunkt O die Winkel $\alpha$ bzw. $\beta$ einnehmen, unter dem Winkel $\alpha'$ und $\beta'$ auf die Punkte a', b' und c' der Projektionsfläche 24 abgebildet.

Dort wird mittels der Abstandsmeßeinrichtung 26 jeweils der Projektionswinkel über die Abstandsmessung der Projektionspunkte a', b' und c' auf der Projektionsfläche 24 ermittelt. Besitzt die Abstandsmeßeinrichtung 26 z.B. eine CCD-Zeile, so werden an den Stellen, an denen die Marken auf dieser Zeile abgebildet werden, Ladungsänderungen bewirkt, die nach seriellem Auslesen von einem Zähler 28 registriert werden und von einem Rechner 18 in entsprechende Winkelwerte $\alpha$ und $\beta$ umgerechnet werden können.

Aus den Projektionswinkeln $\alpha$ und $\beta$ lassen sich unter Anwendung trigonometrischer Funktionen die Koordinaten des Bezugspunktes 0, der hier mit dem Projektionszentrum in der Abbildungsoptik 22 übereinstimmt, ermitteln. Zur Erläuterung der Rechenschritte wird auf Fig. 2 Bezug genommen, in der aus Fig. 1 nur die Marken a, b, c und der Bezugspunkt O übernommen sind. In diesem Fall befindet sich aber der Bezugspunkt O nicht direkt über der Marke b, um hier auch zeichnerisch zu veranschaulichen, daß jede beliebige Position des Bezugs punktes O bestimmt werden kann.

Zwischen dem Bezugspunkt O und den Marken a und b ist der Projektionswinkel $\alpha$ und zwischen dem Bezugpunkt O und den Marken b und c der Projektionswinkel $\beta$ eingeschlossen. Die Abstände der Marken a, b und c betragen jeweils $\Delta$ .

Betrachtet man einmal die Winkel $\alpha$ und $\beta$ für sich, so gibt es verschiedene Punkte, die den gleichen Projektionswinkel $\alpha$ und $\beta$ einnehmen. Diese Punkte befinden sich auf einer Ortskurve, die für den Winkel $\alpha$ durch einen Kreis K1 und für den Winkel $\beta$ durch einen Kreis K2 dargestellt sind. Kombiniert man die beiden Winkel $\alpha$ und $\beta$ , so gibt es nur einen realen Punkt, bei dem die Bedingung erfüllt ist. Dieser Punkt ist durch die Schnittpunkte der beiden Ortskurven, also der Kreise K1 und K2 gegeben.

Die Mittelpunkte M1 und M2 der Kreise K1 und K2 lassen sich so bestimmen, daß die Mittelsenkrech ten zwischen den Marken a und b einerseits und b und c andererseits bestimmt werden und hier die Schnittpunkte mit Linien erhalten werden, welche jeweils unter dem Projektionswinkel, also $\alpha$ oder $\beta$ , durch die Marken a und b bzw. b und c laufen.

Für die Abstände der Mittelpunkte M1 und M2 von der Maßstabsachse, also die Z-Koordinate der Mittelpunkte M1 und M2 ergeben sich

$$Z1 \; = \; \frac{\Delta}{2 \tan \alpha} \; \text{und} \; Z2 \; = \; \frac{\Delta}{2 \tan \beta} \; .$$

Durch mathematische Ableitungen ergeben sich für

$$X_o \; = \; \frac{\Delta \cdot (Z1^2 \; - \; Z2^2)}{(Z1 \; - \; Z2)^2 \; + \; \Delta^2}$$

und für

$$Z_o \; = \; \frac{\Delta^2 \cdot (Z1 \; + \; Z2)}{(Z1 \; - \; Z2)^2 \; + \; \Delta^2}$$

Diese Gleichungen führen also zu einer eindeutigen Lösung und lassen sich mit üblichen Rechnern innerhalb kürzester Zeit bewältigen.

Man erhält dabei sowohl die Koordinate in X-Richtung als auch in Z-Richtung, so daß bei der Bestimmung des Bezugspunktes O des Abtasters 10 kein konstanter Abstand vom Maßstab 12 eingehalten werden muß. Auch die Orientierung des Abtasters 10 ist in Grenzen frei, d.h., der Abtaster 10 kann also auch schräg zum Maßstab 12 stehen. Ein besonderer Vorteil des Bezugspunktgebers besteht darin, daß zwei Koordinaten gleichzeitig erfaßt werden können, wofür beim bisherigen Stand der Technik bislang zwei unabhängige Wegstreckenaufnehmer erforderlich waren.

Bei der bisherigen Beschreibung der Erfindung wurde davon ausgegangen, daß die Lage des Bezugspunktes relativ zu einem Inkrementalmaßstab ermittelt wird. Es ist im Rahmen der Erfindung aber auch mög-

4

lich, zur Grobbestimmung die Lage des Bezugspunktes relativ zu einem Absolutmaßstab zu ermitteln, wobei dann anschließend die im Patentanspruch 10 angegebene Maßnahme zur Interpolation entsprechend auch den Merkmalen des Patentanspruchs 1 erfolgt.

Wenn von dem Absolutmaßstab ausgegangen wird, so hat dies den Vorteil, daß sofort die Lage des Abtasters relativ zu dem Absolutmaßstab bekannt ist, ohne daß es erforderlich ist, die vom Abtaster passierten Marken zuvor auszuwerten. Vielmehr ist im Rahmen der Grobbestimmung sofort die Lage des Abtasters relativ zum Absolutmaßstab bekannt.

**Patentansprüche**

1. Verfahren zur Bestimmung der Lage eines Bezugspunktes (O) eines Abtasters (10) relativ zu einem Inkrementalmaßstab (12) mit darauf angeordneten Marken konstanten Abstandes (a,b,c), wobei zur Grobbestimmung der Lage längs des Maßstabes zunächst die vom Abtaster passierten Marken ausgewertet, insbesondere gezählt und mit dem Abstand multipliziert werden, und wobei zur Feinbestimmung eine Interpolation zwischen den Marken vorgenommen wird, _dadurch gekennzeichnet_, daß zur Interpolation die Projektionswinkel ($\alpha,\beta$) zwischen dem Bezugspunkt und mindestens drei auf dem Maßstab benachbart angeordneter Marken bestimmt werden und die Koordinaten des Bezugspunktes nach trigonometrischen Funktionen berechnet werden.

2. Verfahren nach Anspruch 1, _dadurch gekennzeichnet_, daß die Berechnungen nach folgenden trigonometrischen Funktionen bzw. Gleichungen durchgeführt werden:

$$X_o = \frac{\Delta \cdot (Z1^2 - Z2^2)}{(Z1 - Z2)^2 + \Delta^2}$$

$$Z_o = \frac{\Delta^2 \cdot (Z1 + Z2)}{(Z1 - Z2)^2 + \Delta^2}$$

wobei

$$Z1 = \frac{\Delta}{2 \tan \alpha}$$

und

$$Z2 = \frac{\Delta}{2 \tan \beta}$$

sind, $\alpha$ den Projektionswinkel zwischen dem Bezugspunkt sowie einer ersten und einer zweiten benachbarten Marke, $\beta$ den Projektionswinkel zwischen dem Bezugspunkt und einer zweiten sowie einer dritten benachbarten Marke bezeichnet; $\Delta$ der Abstand zwischen zwei benachbarten Marken ist und $X_o$, $Z_o$ die Koordinaten des Bezugspunktes in Maßstabsrichtung und senkrecht dazu darstellen.

3. Verfahren nach Anspruch 1 oder 2, _dadurch gekennzeichnet_, daß die Projektionswinkel durch optische Abbildung der Marken auf einer Projektionsfläche und Abstandsmessung der Projektionsorte gewonnen werden und als Bezugspunkt das Projektionszentrum einer Abbildungsoptik gewählt wird.

4. Bezugspunktgeber zur Bestimmung der Lage eines Bezugspunktes (O) eines Abtasters (10) relativ zu einem Inkrementalmaßstab (12) mit darauf angeordneten Marken (14) konstanten Abstandes ($\Delta$), bestehend aus einem mit dem Abtaster (10) verbundenen Zähler (16) sowie einem Rechner (18), der so gesteuert ist, daß zur Grobbestimmung die Lage längs des Maßstabes (12) in x-Richtung zunächst die vom Abtaster (10) passierten Marken (14) ausgewertet, insbesondere gezählt und mit dem Abstand ($\Delta$) multipliziert werden, und wobei zur Feinbestimmung eine Interpolation zwischen den Marken (14) vorgenommen wird, _dadurch gekennzeichnet_, daß der Abtaster (10) eine Winkelmeßvorrichtung (20) umfaßt, mittels der die Projektionswinkel ($\alpha$, $\beta$) zwischen dem Bezugspunkt (O) und drei auf dem Maßstab (12) benachbart angeordneter Marken (14) bestimmt werden und daß der Rechner (18) so gesteuert ist, daß er die Koordinaten ($X_o$, $Z_o$) des Bezugs punktes (O) nach trigonometrischen Funktionen berechnet.

5. Bezugspunktgeber nach Anspruch 4, _dadurch gekennzeichnet_, daß der Rechner (18) als trigonometrische Funktionen folgende Funktionen oder Gleichungen verarbeitet:

$$X_o = \frac{\Delta \cdot (Z1^2 - Z2^2)}{(Z1 - Z2)^2 + \Delta^2}$$

$$Z_o = \frac{\Delta^2 \cdot (Z1 + Z2)}{(Z1 - Z2)^2 + \Delta^2}$$

wobei

$$Z1 \; = \; \frac{\Delta}{2 \tan \alpha}$$

und

$$Z2 \; = \; \frac{\Delta}{2 \tan \beta}$$

sind.

6. Bezugspunktgeber nach Anspruch 4 oder 5, dadurch gekennzeichnet, daß der Abtaster (10) als optischer Abtaster ausgebildet ist, der eine Abbildungsoptik (22) mit einer Projektionsfläche (24) und einer Abstandsmeßeinrichtung (26) umfaßt, wobei der Bezugspunkt (O) durch das dem Maßstab (12) zugewandte Projektionszentrum der Abbildungsoptik (22) gebildet ist.

7. Bezugspunktgeber nach Anspruch 6, dadurch gekennzeichnet, daß die Projektionsfläche (24) und die Abstandsmeßeinrichtung (26) durch ein Diodenarray, vorzugsweise eine CCD-Zeile, gebildet ist, das mit einer Zählschaltung (28) verbunden ist.

8. Bezugspunktgeber nach einem oder mehreren der Ansprüche 4 - 7, dadurch gekennzeichnet, daß der Inkrementalmaßstab (12) mit Marken (14) versehen ist, die einen Abstand ($\Delta$) von ca. 1 mm aufweisen.

9. Bezugspunktgeber nach einem oder mehreren der Ansprüche 4 - 8, dadurch gekennzeichnet, daß der Inkrementalmaßstab (12) aus einem Material mit niedrigem Temperaturausdehnungskoeffizienten, vorzugsweise aus Invar oder Zerodur besteht.

10. Verfahren zur Bestimmung der Lage eines Bezugspunktes (O) eines Abtasters (10) relativ zu einem Absolutmaßstab mit darauf angeordneten Marken konstanten Abstandes (a,b,c) sowie mit Codierungen, wobei zur Grobbestimmung der Lage längs des Maßstabes zunächst die Codierungen ausgewertet werden, so daß die Absolutwerte der Marken bekannt sind, und wobei zur Feinbestimmung eine Interpolation zwischen den Marken vorgenommen wird, dadurch gekennzeichnet, daß zur Interpolation die Projektionswinkel ($\alpha, \beta$) zwischen dem Bezugspunkt und mindestens drei auf dem Maßstab benachbart angeordneter Marken bestimmt werden und die Koordinaten des Bezugspunktes nach trigonometrischen Funktionen berechnet werden.

## Claims

1. Method of determining the position of a reference point (O) of a scanner (10) relative to an incremental scale (12) having marks disposed at constant spacings (a, b, c) thereon, wherein, for the coarse determination of the position along the scale, the marks passed over by the scanner are first evaluated, especially counted and multiplied by the spacing, and wherein an interpolation between the marks is performed for the fine determination, characterized in that, for the interpolation the projection angles ($\alpha, \beta$) between the reference point and at least three marks disposed adjacent to one another on the scale are determined, and the coordinates of the reference point are calculated from trigonometrical functions.

2. Method according to Claim 1, characterized in that the calculations are carried out from the following trigonometrical functions and equations:

$$X_o \; = \; \frac{\Delta \cdot (Z1^2 - Z2^2)}{(Z1 - Z2)^2 + \Delta^2}$$
$$Z_o \; = \; \frac{\Delta^2 \cdot (Z1 + Z2)}{(Z1 - Z2)^2 + \Delta^2}$$

where

$$Z1 \; = \; \frac{\Delta}{2 \tan \alpha}$$

and

$$Z2 \; = \; \frac{\Delta}{2 \tan \beta}$$

$\alpha$ denotes the projection angle between the reference point and a first and a second adjacent mark, $\beta$ denotes the projection angle between the reference point and a second and a third adjacent mark, $\Delta$ is the distance between two adjacent marks and $X_0, Z_0$ are the coordinates of the reference point in the direction of the scale and perpendicularly thereto.

3. Method according to Claim 1 or 2, characterized in that the projection angles are obtained by optical imaging of the marks on a projection surface and measurement of the spacing of the projection positions and the projection centre of an imaging optic is chosen as reference point.

4. Reference point emitter for determining the position of a reference point (O) of a scanner (10) relative to an incremental scale (12) having marks (14) disposed thereon at constant spacings ($\Delta$), consisting of a counter (16) connected with the scanner (10) and of a computer (18) which is so controlled that, for the coarse determination of the position along the scale (12) in the x-direction, the marks (14) passed over by the scanner (10) are first evaluated, especially counted and are multiplied by the spacing ($\Delta$), and wherein, for the fine determination, an interpolation is carried out between the marks (14), characterized in that the scanner (10) comprises an angle measuring device (20), by means of which the projection angles ($\alpha$, $\beta$) between the reference point (O) and three marks (14) disposed adjacent to one another on the scale (12) are determined, and that the computer (18) is so controlled that it calculates the coordinates ($X_0$, $Z_0$) of the reference point (O) from trigonometrical functions.

5. Reference point emitter according to Claim 4, characterized in that the computer (18) processes, as trigonometrical functions, the following functions or equations:

$$X_o = \frac{\Delta \cdot (Z1^2 - Z2^2)}{(Z1 - Z2)^2 + \Delta^2}$$

$$Z_o = \frac{\Delta^2 \cdot (Z1 + Z2)}{(Z1 - Z2)^2 + \Delta^2}$$

where

$$Z1 = \frac{\Delta}{2 \tan \alpha}$$

and

$$Z2 = \frac{\Delta}{2 \tan \beta}$$

6. Reference point emitter according to Claim 4 or 5, characterized in that the scanner (10) is constructed as an optical scanner, which comprises an imaging optic (22) having a projection surface (24) and a spacing measuring device (26), wherein the reference point (O) is formed by the centre of projection of the imaging optic (22) which is towards the scale (12).

7. Reference point emitter according to Claim 6, characterized in that the projection surface (24) and the spacing measuring device (26) are formed by a diode array, preferably a CCD line, which is connected to a counting circuit (28).

8. Reference point emitter according to one or more of Claims 4 to 7, characterized in that the incremental scale (12) is provided with marks (14) which have a spacing ($\Delta$) of approximately 1 mm.

9. Reference point emitter according to one or more of Claims 4 to 8, characterized in that the incremental scale (12) is of a material having a low coefficient of thermal expansion, preferably of Invar or Zerodur.

10. Method of determining the position of a reference point (O) of a scanner (10) relative to an absolute scale having marks of constant spacing (a, b, c) disposed thereon and also having codings, wherein, for the coarse determination of the position along the scale, the codings are first evaluated so that the absolute values of the marks are known, and wherein, for the fine determination, an interpolation is carried out between the marks, characterized in that, for the interpolation, the projection angles ($\alpha$, $\beta$) between the reference point and at least three marks disposed adjacent to one another on the scale are determined and the coordinates of the reference point are calculated from trigonometrical functions.

**Revendications**

1. Méthode pour déterminer la position d'un point de référence (O) d'un analyseur (10) par rapport à une règle graduée incrémentiele (12) portant des repères à distances constantes (a, b, c), dans laquelle, pour l'estimation grossière de la position le long de la règle graduée, on évalue, en particulier on compte et on multiplie par la distance, les marques passées devant l'analyseur, et, pour la définition fine, on procède à une interpolation entre les marques, <u>caractérisée en ce</u> que, pour l'interpolation, on détermine les angles

de projection ($\alpha$, $\beta$ ) entre le point de référence et au moins trois marques voisines sur la règle graduée et on calcule les coordonnées du point de référence par des fonctions trigonométriques.

2. Méthode suivant la revendication 1, <u>caractérisée en ce</u> que les calculs sont faits suivant les fonctions ou les équations trigonométriques suivantes:

$$X_o = \frac{\Delta \cdot (Z1^2 - Z2^2)}{(Z1 - Z2)^2 + \Delta^2}$$

$$Z_o = \frac{\Delta^2 \cdot (Z1 + Z2)}{(Z1 - Z2)^2 + \Delta^2}$$

où

$$Z1 = \frac{\Delta}{2 \tan\alpha}$$

et

$$Z2 = \frac{\Delta}{2 \tan \beta}$$

$\alpha$ étant défini comme l'angle de projection entre le point de référence et des première et seconde marques voisines, $\beta$ comme l'angle de projection entre le point de référence et des deuxième et troisième marques voisines, $\Delta$ étant la distance entre deux marques voisines et $X_o$, $Z_o$ étant les coordonnées du point de référence dans la direction de la règle graduée et la direction perpendiculaire à celle-ci.

3. Méthode suivant la revendication 1 ou 2, <u>caractérisée en ce</u> qu'on obtient les angles de projection par image optique des marques sur une surface de projection et mesure de distance du lieu de projection et, comme point de référence, on prend le centre de projection d'une optique d'image.

4. Définisseur de point de référence pour la définition de la position d'un point de référence (O) d'un analyseur (10) par rapport à une règle graduée incrémentiele (12) portant des marques (14) à distances constantes ($\Delta$), comprenant un compteur (16) reliée à l'analyseur (10) ainsi qu'un calculateur (18) qui est commandé de manière que, pour l'estimation grossière de la position le long de la règle graduée (12) dans la direction des <u>x</u>, on évalue, en particulier on compte et on multiplie par la distance ($\Delta$), les marques (14) qui passent devant l'analyseur (10), et, pour la définition fine, on procède à une interpolation entre les marques (14), <u>caractérisé en ce</u> que l'analyseur (10) comprend un dispositif de mesure d'angle (20) au moyen duquel les angles de projection ($\alpha$,$\beta$ ) entre le point de référence (O) et trois marques (14) voisines sur la règle graduée (12) sont définis et en ce que le calculateur (18) est commandé de manière qu'il calcule les coordonées ($X_o$, $Z_o$) du point de référence (O) suivant des fonctions trigonométriques.

5. Définisseur de point de référence suivant la revendication 4, <u>caractérisé en ce</u> que le calculateur (18) traite comme fonctions trigonométriques les fonctions ou équations suivantes:

$$X_o = \frac{\Delta \cdot (Z1^2 - Z2^2)}{(Z1 - Z2)^2 + \Delta^2}$$

$$Z_o = \frac{\Delta^2 \cdot (Z1 + Z2)}{(Z1 - Z2)^2 + \Delta^2}$$

où

$$Z1 = \frac{\Delta}{2 \tan \alpha}$$

et

$$Z2 = \frac{\Delta}{2 \tan \beta}$$

6. Définisseur de point de référence suivant la revendication 4 ou 5, <u>caractérisé en ce</u> que l'analyseur (10) est conçu sous la forme d'un analyseur optique qui comprend une optique de projection (22) avec une surface de projection (24) et un dispositif de mesure de distance (26), le point de référence (O) étant créé par le centre de projection de l'optique d'image (22) tournée vers la règle graduée (12).

7. Définisseur de point de référence suivant la revendication 6, <u>caractérisé en ce</u> que la surface de projection (24) et le dispositif de mesure de distance (26) sont formés par un réseau de diodes, de préférence une rangée de CCD, qui est relié à un circuit de comptage (28).

8. Définisseur de point de référence suivant l'une ou plusieurs des revendications 4 à 7, <u>caractérisé en ce</u> que la règle graduée incrémentiele (12) est pourvue de marques (14) qui se présentent avec une distance

($\Delta$) d'environ 1 mm.

9. Définisseur de point de référence suivant l'une ou plusieurs des revendications 4 à 8, caractérisé en ce que la règle graduée incrémentiele (12) est faite en un matériau ayant un coefficient de dilatation thermique faible, de préférence en Invar ou en Zerodur.

10. Méthode pour déterminer la position d'un point de référence (O) d'un analyseur (10) par rapport à une règle graduée absolue portant des marques de distance constante (a, b, c), ainsi que des codages, dans laquelle, pour l'estimation grossière de la position le long de la règle graduée, on évalue d'abord les codages, de manière à connaître les valeurs absolues des marques, et, pour la définition fine, on procède à une interpolation entre les marques, caractérisée en ce que, pour l'interpolation, on détermine les angles de projection ($\alpha,\beta$) entre le point de référence et au moins trois marques voisines de la règle graduée, et on calcule les coordonnées du point de référence par des fonctions trigonométriques.

Fig.1

Fig.2